# FASCICULE DE BREVET EUROPEEN

(11) **EP 2 072 562 B1**
(45) Date de publication et mention de la délivrance du brevet: **09.04.2014**
(21) Numéro de dépôt: 08171365.3
(22) Date de dépôt: 11.12.2008
(51) Int. Cl.: C08J 3/20, C08L 95/00, E01C 7/26

(54) **Procédé de fabrication d'enrobes double phase**
Verfahren zur Herstellung von Doppelphasen-Mischgut
Double-phase method of manufacturing coatings

(30) Priorité: 21.12.2007 FR 0760279
(43) Date de publication de la demande: 24.06.2009
(73) Titulaire: Eurovia, 92500 Rueil-Malmaison (FR)
(72) Inventeur: De Sars, Thierry, 69003, LYON (FR)
(74) Mandataire: Regimbeau

(56) Documents cités:
- EP-A- 1 469 038
- EP-A- 1 469 127
- FR-A- 2 623 219
- FR-A- 2 678 653
- FR-A- 2 847 596

## Description

La présente invention concerne un procédé de fabrication d'enrobés bitumineux à chaud, à froid ou tiède prêt à l'emploi comprenant une étape de stockage intermédiaire.

Un enrobé bitumineux est un mélange d'au moins des granulats et un liant bitumineux. Typiquement et de manière non restrictive, la quantité suffisante de liant pour obtenir 1 à 15 parties massiques de bitume résiduel est malaxée avec 85 à 99 parties massiques de granulat (considérant leur poids sec). Des additifs peuvent être ajoutés soit au liant, soit au granulat, soit à l'enrobé. La fabrication de l'enrobé, c'est-à-dire la manière de mélanger les constituants, peut être obtenue de diverses façons. On distingue généralement deux familles de procédés : les procédés dits "à chaud" et les procédés dits "à froid". De manière plus récente, sont apparus des procédés dits "tièdes" ou "semi-tièdes", intermédiaires entre les deux. La distinction entre les procédés tient essentiellement à la température des granulats.

Dans le cas du procédé dit "à chaud", les granulats sont chauffés dans des dispositifs appelés "sécheurs" afin de les sécher, permettant ainsi une bonne adhésion du bitume au granulat. Le bitume est également chauffé, à des températures de l'ordre de 160°C afin d'en abaisser la viscosité et de permettre un bon enrobage des granulats. L'enrobé ainsi formé est ensuite appliqué chaud (typiquement à plus de 150°C) sur la chaussée puis compacté chaud également, la température initialement élevée garantissant sa maniabilité. Le matériau se rigidifie ensuite au fur et à mesure qu'il se refroidit.

Dans les procédés dits "à froid", les granulats ne sont pas séchés, et sont mélangés tels quels, c'est-à-dire avec leur humidité naturelle et à température ambiante. Le bitume arrive alors sous diverses formes, la plus courante étant celle d'une émulsion de bitume qui permet ainsi d'avoir un produit peu visqueux et donc maniable à température ambiante. L'émulsion est parfois légèrement réchauffée à des températures de l'ordre de 50°C. Un autre moyen, d'usage encore peu développé mais en croissance, consiste à faire mousser le bitume chaud (typiquement 160°C) au contact d'un peu d'eau injectée directement dans le bitume selon des procédés adaptés, pour ensuite mélanger cette mousse au granulat dans son humidité naturelle. Des additifs peuvent être ajoutés au bitume et/ou à l'eau injectée pour modifier les propriétés de la mousse, notamment sa stabilité et son volume.

Les procédés dits "tièdes" ou "semi-tièdes", d'usage encore marginal, et dont le nom est parfois différent de celui proposé ici (semi-chaud,...) mais que l'homme de l'art saura reconnaître de manière non équivoque, consistent soit à légèrement réchauffer le granulat, mais pas assez pour le sécher complètement, soit à le sécher à des températures justes supérieures à 100°C. Plusieurs procédés existent, le liant pouvant par exemple être apporté sous les mêmes formes que pour les enrobés à froid (émulsion ou mousse de bitume). Également, et en particulier lorsque l'objectif est de diminuer la température de fabrication et de mise en oeuvre des enrobés à chaud, afin de limiter les émissions de fumées, cela peut nécessiter l'emploi d'additifs ou de procédés originaux afin d'obtenir que l'enrobé maintienne un niveau de maniabilité compatible avec sa mise en oeuvre à des températures inférieures à celles habituellement utilisées.

Les enrobés bitumineux peuvent en outre être fabriqués en mode continu ou discontinu par des procédés bien connus de l'homme du métier. Des additifs peuvent être ajoutés au mélange.

Toutefois pour certains types d'additifs, tels que les colorants, des problèmes se posent. En effet en général les volumes de production des enrobés colorés sont faibles, ce qui ne justifie pas de leur réserver un réseau d'installation dédié. En conséquence, ils sont rarement produits en mode continu. Par ailleurs il est nécessaire de bien nettoyer les installations, avant la fabrication des enrobés colorés pour que ceux-ci ne soient pas pollués par les enrobés noirs présents dans l'installation, et après la fabrication de ces enrobés pour éviter la pollution des autres enrobés non colorés qui y seront fabriqués par la suite. Ceci pose donc un problème de rendement et de perturbation du fonctionnement normal du poste d'enrobage.

Afin d'éviter ces problèmes, il est connu, dans le cas des liants translucides, de fabriquer un produit intermédiaire qui est stocké avant la fabrication de l'enrobé (FR 2 678 653). Toutefois, dans ce cas le produit intermédiaire stocké est un produit fini dans sa formulation mais n'est pas un enrobé prêt à l'emploi car il se trouve à l'état particulaire, les granulats n'étant pas liés au liant. Il est donc nécessaire de les réchauffer avant utilisation afin de réaliser un véritable enrobé.

Il serait en outre intéressant de pouvoir stocker un produit intermédiaire avant l'ajout des derniers additifs afin de pourvoir obtenir une certaine flexibilité.

Par ailleurs il serait également intéressant de modifier des enrobés à chaud prêt à l'emploi obtenus suite à un procédé classique. En effet si ces enrobés à chaud ne sont pas utilisés dans les 48 heures de leur fabrication, il n'est plus possible de le faire. Il est alors nécessaire de les jeter ou de les recycler sous forme d'agrégats d'enrobés, c'est-à-dire de les concasser avant une éventuelle réutilisation dans d'autres enrobés. Ceci rajoute donc une étape de concassage au procédé de fabrication d'enrobés, étape qui augmente la durée de ces procédés et donc leur coût. Il est également nécessaire d'élever ces agrégats d'enrobés en température, ce qui entraine des coûts de fabrication et des coûts énergétiques supplémentaires.

Il est également connu que d'après la demande de brevet FR 2 623 219 la fabrication d'enrobés à froid denses bitumineux stockables dans lesquels les granulats de petite dimension (granulométrie 0/2 ou 0/4 mm) sont stockés après enrobage avant d'être ajoutés à la fin de la phase d'enrobage des granulats de moyenne et de grande dimension (2/D mm et 4/D mm).

Or, les granulats de petite dimension (seuls éléments stockés) ne peuvent pas être considérés comme un enrobé ou un mélange maître selon la présente invention.

En effet, comme indiqué dans le brevet US 4 978 393 qui appartient à la même famille que le brevet FR 2 623 619, le produit obtenu ne s'agglomère pas pendant le stockage et se comporte comme un matériau non enrobé. Or, dans le cas de la présente invention, le mélange maître ou l'enrobé est aggloméré puisque le problème à résoudre est de s'assurer un mélange homogène du composant complémentaire de formulation avec le mélange maître et/ou l'enrobé obtenu à la fin de l'étape (a) du procédé selon la présente invention.

Il est également connu d'après le document EP 1 469 127 de rajouter de l'eau juste avant l'épandage de l'enrobé bitumineux, c'est-à-dire au moment de la mise en oeuvre de l'enrobé bitumineux.

Toutefois, dans le cas de la présente invention, lorsque le composant complémentaire de formulation est un fluidifiant, il est ajouté sur le site de production et non pas lors de l'épandage de l'enrobé bitumineux. Ceci a comme avantage d'utiliser un matériel d'épandage classique alors que dans EP 1 469 127, le matériel d'épandage est très particulier pour permettre le mélange du fluidifiant avec l'enrobé.

En outre, l'ajout du fluidifiant sur le site de production permet de modifier la maléabilité de l'enrobé pour faciliter sa mise en oeuvre mais aussi son acheminement jusqu'au matériel d'épandage, qui dans le cas contraire peut être problématique.

De façon surprenante les inventeurs ont découverts qu'il était possible de réutiliser des enrobés obtenus par des méthodes classiques après stockage, en ajoutant un ou des additifs au dernier moment dans une deuxième étape de malaxage, et en particulier dans le cas des fluidifiants sur le site de production, sans que cela ne nuise à la qualité de l'enrobé obtenu, c'est-à-dire sans que la cohésion ou les qualités mécaniques de cet enrobé ne soient diminués de manière significative, l'additif ajouté se mélangeant de manière homogène à l'enrobé.

Il est surprenant, en particulier dans le cas des additifs pulvérulents, que le fait que des additifs soient ajoutés après stockage de l'enrobé, ne nuise pas à leur dispersion dans l'enrobé et que, par exemple dans le cas des colorants, les enrobés obtenus soient sensiblement identiques (visuellement et mécaniquement) aux enrobés obtenus par un procédé classique (c'est-à-dire sans stockage intermédiaire). En effet, une fois l'enrobé fabriqué, c'est-à-dire une fois que le liant bitumineux a totalement enrobé les granulats et en particulier a migré dans les pores des granulats, il semble difficile pour l'homme du métier de lui rajouter un additif, en particulier pulvérulent sans poser des problèmes d'adhérence du liant à l'enrobé ou de dispersion uniforme et homogène de l'additif dans l'enrobé. Or de façon surprenante ces problèmes ne se posent pas dans le procédé selon la présente invention.

La présente invention concerne donc un procédé de fabrication d'un enrobé bitumineux à chaud, à froid ou tiède prêt à l'emploi, **caractérisé en ce qu**'il comprend les étapes successives suivantes :
(a) préparation d'un mélange maître ou d'un enrobé bitumineux à chaud, à froid ou tiède, par malaxage d'une partie ou de la totalité du liant bitumineux dosé sous forme liquide avec une partie ou la totalité des granulats, avantageusement une partie ou la totalité des granulats de grande, moyenne et/ou de petite dimension, et éventuellement avec
   - une partie ou la totalité des fines et/ou
   - une partie ou la totalité des agrégats d'enrobés et/ou
   - une partie ou la totalité de différents additifs
   de façon à obtenir un mélange dans lequel les granulats et les éventuels fines et agrégats sont enrobés par le bitume, avantageusement totalement enrobés par le bitume,
(b) stockage du mélange maître ou de l'enrobé bitumineux obtenu à l'étape (a),
(c) malaxage du mélange maître ou de l'enrobé bitumineux stocké à l'étape (b) avec un ou plusieurs composants complémentaires de formulation de façon à obtenir un enrobé bitumineux à chaud, à froid ou tiède prêt à l'emploi, l'étape (c) étant mise en oeuvre sur le site de production de l'enrobé dans le cas où le composant complémentaire de formulation est un fluidifiant.

L'étape (c) permet de personnaliser un enrobé, en fonction de la demande. Ainsi, l'enrobé obtenu à l'issu de l'étape (c) est adapté à son utilisation définitive et spécifique, l'étape (c) étant mise en oeuvre sur le site de production de l'enrobé dans le cas où le composant complémentaire de formulation est un fluidifiant, avantageusement dans le cas où le composant complémentaire de formulation est sous forme liquide. En effet, dans ce cas, l'étape (c) n'est pas mise en oeuvre sur le site d'épandage de l'enrobé, par exemple pendant son épandage.

Le site d'épandage correspond au site où l'enrobé est utilisé. Il s'agit par exemple d'une route ou d'un trottoir.

Au sens de la présente invention, on entend par "site de production de l'enrobé", un ou plusieurs sites, autres que le site d'épandage, où les étapes (a), (b) et (c) sont mises en oeuvre.

Le procédé selon l'invention est donc basé sur un principe de fabrication d'une formulation d'enrobés (chauds, tièdes ou froids) en 2 phases distinctes :
- une phase 1 (étape (a)) basée sur le dosage et le malaxage d'une quantité des constituants d'une formulation incluant une partie ou la totalité du liant dosé à l'état liquide.
- une phase 2 (étape (c)) basée sur le complément de dosage et de malaxage pour obtenir le produit final.

Ces deux phases sont séparées par un stockage (étape (b)). Il y a donc un transfert du produit entre le dispositif de l'étape (a) et le dispositif de stockage de l'étape (b) et entre le dispositif de stockage de l'étape (b) et le dispositif de l'étape (c).

Avantageusement, le dispositif de l'étape (c) est situé sur le site de production de l'enrobé.

Ainsi, le procédé selon la présente invention permet de compléter sur demande une formulation d'enrobé à l'aide de composants complémentaires de formulation, c'est-à-dire de fabriquer en grande quantité un enrobé à l'étape (a), puis de rajouter, sur demande, différents composants complémentaires de formulation pour fabriquer de plus petites quantités d'enrobés ainsi adaptés à leur utilisation définitive.

En particulier, dans le cas de la fabrication des enrobés colorés, le procédé selon la présente invention permet dans l'étape (a) de fabriquer un enrobé non coloré et dans l'étape (c) de rajouter le colorant désiré. Ce procédé présente alors les avantages suivants :
- possibilité de fabriquer des enrobés colorés (rouge ou autres) sur un poste continu avec une qualité de service équivalente ou supérieure à celle d'un poste discontinu ;
- pas d'attente dans la mesure où l'enrobé adapté à l'étape (c) peut être immédiatement fabriqué sans arrêt de la production d'autres enrobés en cours
- livraison de petite quantité possible
- pas de pollution de l'enrobé (due aux enrobés noirs pouvant se décrocher dans le processus de malaxage, de transfert ou de stockage des enrobés des procédés classiques mis en oeuvre) ;

Au sens de la présente invention, on entend par « mélange maître » la partie commune de la formulation de plusieurs types d'enrobés ne contenant pas la totalité du bitume et/ou des granulats nécessaire à la fabrication d'un enrobé prêt à l'emploi. Cette partie commune est agglomérée car elle contient une partie du bitume qui permet l'agglomération avec les différents constituants du mélange-maître. Il s'agit donc d'un mélange maître aggloméré. Le mélange maître a une forme proche de celle d'un enrobé et consiste donc en la base de la formulation pour un enrobé, le composant complémentaire de formulation permettant d'obtenir un enrobé plus particulier, par exemple ayant la coloration voulue ou ayant les caractéristiques de sonorité améliorées ou des caractéristiques esthétiques améliorées ou des caractéristiques de maléabilité modifiés.

Au sens de la présente invention, on entend par « liant bitumineux », tout liant hydrocarboné, avantageusement d'origine fossile, ou tout liant d'origine végétal utilisable pour la réalisation d'enrobé. Avantageusement il s'agit d'un bitume pur, d'un bitume additivé, par exemple additionné de fluxants et/ou de fluidifiants et/ou de cires d'origine hydrocarbure, synthétique, végétale ou végétale fossile, et/ou de polymères, et/ou d'acide organique, seuls ou en combinaison, d'un liant synthétique clair d'origine pétrolière, d'un bitume pigmentable, d'un bitume coloré ou d'un liant d'origine végétal.

Ce liant bitumineux peut se trouver sous forme liquide ou sous la forme d'une émulsion ou d'une mousse. Avantageusement, dans le cas de la fabrication d'enrobés bitumineux à froid ou tiède, le liant bitumineux se trouve sous la forme d'une émulsion ou d'une mousse.

Au sens de la présente invention, on entend par « granulats », tout granulats routiers d'origine diverses, parmi lesquels les granulats issus de carrières ou de gravières, les laitiers, les schistes, les granulats artificiels de toute origine et provenant par exemple de mâchefers d'incinération des ordures ménagères (MIOM), ainsi que leurs mélanges en toutes proportions ; avantageusement ces granulats peuvent être secs ou humides. De façon avantageuse, ils peuvent avoir été prétraités avant leur utilisation dans le procédé selon la présente invention, par exemple par pré-enrobage avec une huile.

La granulométrie des granulats est choisie dans la gamme 0/Dₘₐₓ, Dₘₐₓ étant le diamètre maximal des granulats tel que défini selon la norme XP P 18-545 de février 2004, et allant de 0 à 45 mm.

Avantageusement, les granulats selon l'invention comprennent des granulats de petite dimension, de moyenne dimension ou de grande dimension et leur mélange.

Au sens de la présente invention, on entend par « granulat de petite dimension » les granulats de 0 à 4 mm, avantageusement de 0 à 6 mm.

Au sens de la présente invention, on entend par « granulat de grande dimension » les granulats de 14 à 45 mm, avantageusement de 10 à 45 mm.

Au sens de la présente invention, on entend par « granulat de moyenne dimension » les granulats de 4 à 14 mm, avantageusement de 6 à 10 mm.

Avantageusement, la partie des granulats ajoutée à l'étape (a) du procédé selon la présente invention consiste en la totalité des granulats de petite, de moyenne ou de grande dimension ou au mélange de la totalité des granulats de petite et grande dimension ou des granulats de petite et moyenne dimension, ou des granulats de grande et moyenne dimension, le composant complémentaire de formulation pouvant consister respectivement en la totalité des granulats de dimension non ajoutée à l'étape (a).

Au sens de la présente invention, on entend par « fines » toute charge minérale ou siliceuse, avantageusement calcaire, ayant une dimension inférieure à 80µm, avantageusement passant à travers un tamis à maille carrée de 0,063 mm de côté. Les fines peuvent être des fines d'apport ou de récupération.

Au sens de la présente invention, on entend par « agrégats d'enrobés », tout agrégats de matériaux de récupération, avantageusement résultant du recyclage des matériaux récupérés lors de la réfection des routes ou d'enrobés bitumineux recyclés et donc contenant des granulats et des liants naturels ou artificiels sous forme solide.

Au sens de la présente invention, on entend par « additifs » tous les éléments qui peuvent modifier le liant bitumineux ou les caractéristiques mécaniques, visuelles ou d'épandage de l'enrobé ou du mélange-maître ou encore l'aspect esthétique de l'enrobé ou du mélange-maître.

Ces additifs peuvent être dosés sous forme liquide, solide, pâteuse, pulvérulente ou sous forme de granulés. Dans un mode de réalisation avantageux, les additifs sont choisis parmi les fluxants, les fluidifiants, les poudrettes de caoutchouc, les fibres, les morceaux de verre ou de miroir, les zéolithes, les gilsonites, les ciments, la chaux, les déchets de câble, le polyéthylène, les polymères, les colorants, les cires, les additifs d'origine végétale et leurs mélanges.

Au sens de la présente invention, on entend par « composants complémentaires de formulation » tout composant qui permet de modifier un enrobé pour le personnaliser, et/ou pour le rendre prêt à l'emploi ou qui permet de transformer un mélange-maître en un enrobé prêt à l'emploi.

Ces composants complémentaires de formulation peuvent être dosés sous forme liquide, solide, pâteuse, pulvérulente ou sous forme de granulés dans l'étape (c) du procédé selon la présente invention. Avantageusement il s'agit d'une forme solide, pâteuse ou pulvérulente ou de granulés, de façon encore plus avantageuse d'une forme solide ou pulvérulente ou de granulés, de façon la plus avantageuse d'une forme pulvérulente.

De façon avantageuse, le ou les composants complémentaires de formulation sont choisis parmi : le complément de liant bitumineux et/ou le complément des granulats, avantageusement choisi parmi la totalité des granulats de grande, de moyenne et/ou de petite dimension et/ou la totalité ou le complément des fines et/ou la totalité ou le complément des agrégats d'enrobés et/ou la totalité ou le complément des additifs et le mélange de ceux-ci.

Avantageusement les composants complémentaires de formulation sont choisis parmi les colorants, avantageusement l'oxyde de fer, les fluxants, les fluidifiants, avantageusement l'eau, les poudrettes de caoutchouc, les fibres, les morceaux de verre ou de miroir, les zéolithes, les gilsonites, les ciments, la chaux, les déchets de câble, le polyéthylène, les polymères, les cires, les additifs d'origine végétale et leurs mélanges.

De façon particulièrement avantageuse, les composants complémentaires de formulation sont des additifs pulvérulents, avantageusement des colorants, avantageusement l'oxyde de fer.

Dans un mode de réalisation particulier, les composants complémentaires de formulation consistent en le complément de bitume et un additif ou un colorant sous forme liquide, solide, pulvérulente ou de granulés et éventuellement un fluidifiant.

Dans un autre mode de réalisation avantageux de l'invention, le composant complémentaire de formulation comprend un fluidifiant seul ou en association avec un autre additif.

Avantageusement, la totalité des granulats est ajoutée à l'étape (a) du procédé selon la présente invention.

De façon encore plus avantageuse, la totalité des granulats de petite dimension et/ou de grande dimension est ajouté à l'étape (a) du procédé selon la présente invention.

De façon avantageuse, l'étape (a) est mise en oeuvre en mode continu ou discontinu. Ces modes de fabrications sont bien connus de l'homme du métier.

Ainsi avantageusement l'étape (a) consiste en un procédé classique de fabrication d'un enrobé bitumineux, bien connu de l'homme du métier, ou d'un mélange-maître. L'enrobé bitumineux obtenu à l'étape (a) peut être un enrobé prêt à l'emploi.

Le principe par exemple d'un poste enrobage continu avec tambour sécheur enrobeur « courant parallèle » est le suivant :

Si l'enrobé ou le mélange-maître à fabriquer nécessite le chauffage et/ou le séchage des granulats, alors, ce séchage et/ou chauffage est effectué dans un tambour sécheur enrobeur à courant parallèle (sens gaz = sens matériaux). Eventuellement tout ou partie des fines de récupération et des fines d'apport peuvent être ensuite introduites et malaxées à l'intérieur du tube sécheur enrobeur. Tout ou partie du liant bitumineux est introduit sous forme liquide et malaxé à l'intérieur du tube sécheur enrobeur. Eventuellement tout ou partie des agrégats d'enrobés peuvent être introduits et malaxés dans le tube sécheur enrobeur. Eventuellement tout ou partie des additifs divers (fibres...) peuvent être introduits et malaxés dans le tube sécheur enrobeur.

L'enrobé ou le mélange-maître obtenu est ensuite stocké (étape (b)).

Le principe par exemple d'un poste enrobage continu avec tambour sécheur enrobeur « contre courant » est le suivant :
Si l'enrobé ou le mélange-maître à fabriquer nécessite le chauffage et/ou le séchage des granulats, alors, ce séchage et/ou chauffage est effectué dans un tambour sécheur enrobeur à contre courant (sens gaz contraire sens matériaux). Eventuellement tout ou partie des fines de récupération et les fines d'apport peuvent ensuite être introduites et malaxées à l'intérieur du tube sécheur enrobeur. Tout ou partie du liant bitumineux est introduit sous forme liquide et malaxé à l'intérieur du tube sécheur enrobeur. Eventuellement tout ou partie des agrégats d'enrobés peuvent être introduits et malaxés dans le tube sécheur enrobeur. Eventuellement tout ou partie des additifs divers (fibres ...) peuvent être introduits et malaxés dans le tube sécheur enrobeur.
L'enrobé ou le mélange-maître obtenu est ensuite stocké (étape (b)).

Le principe par exemple d'un poste enrobage discontinu est le suivant :
Si l'enrobé ou le mélange-maître à fabriquer nécessite le chauffage et/ou le séchage des granulats, alors, ce séchage et/ou chauffage est effectué dans un tambour sécheur à contre courant (sens gaz contraire sens matériaux). Eventuellement tout ou partie des agrégats d'enrobés peuvent éventuellement être introduits dans le tambour pour être chauffé et pré enrobés. Le mélange est ensuite transporté jusqu'à une tour de stockage avec 2 possibilités :
- Passage sur un crible pour être reclassés par granulométries (si pas d'agrégats d'enrobés)
- Stockage dans une trémie tampon « direct » sans passer par le crible. Tout ou partie du liant bitumineux est introduit sous forme liquide dans le malaxeur. Eventuellement tout ou partie des agrégats d'enrobés, des fines de récupération, des fines d'apport, des divers additifs (fibres...) peuvent être dosés séparément et introduits dans le malaxeur. L'enrobé ou le mélange-maître obtenu est ensuite stocké (étape (b)).

Avantageusement la température de l'étape (a) et/ou (c) est comprise entre 80°C et 200°C, de façon avantageuse, l'enrobé bitumineux obtenu à l'issu de l'étape (a) ou à l'issu des étapes (a) et (c) est un enrobé bitumineux à chaud ou tiède.

Le temps de malaxage de l'étape (a) est avantageusement compris entre 15 secondes et 2 minutes.

Au sens de la présente invention, on entend par « stockage » l'immobilisation de l'enrobés ou du mélange-maître, dans un lieu de stockage, avantageusement un silo pendant au minimum quelques minutes (au moins 10 minutes par exemple), avantageusement quelques heures, de façon avantageuse au moins un ou deux jours, parfois au moins une ou deux semaines, voire au moins un ou deux mois.

Dans un mode de réalisation particulier de l'invention, le temps de stockage de l'étape (b) est supérieur à 2 heures, avantageusement supérieur à 4 heures.

Dans un autre mode de réalisation avantageux, le temps de stockage de l'étape (b) dépend du type d'enrobé ou de mélange maître obtenu à l'étape (a) (mélange maître-enrobé à chaud, à froid ou tiède). Dans le cas des enrobés ou mélange-maître à chaud ou tiède, le temps de stockage est au maximum de 48 heures, avantageusement au maximum de 24 heures, de façon avantageuse, au maximum de 12 heures. En outre dans ce cas avantageusement le stockage est effectué dans un dispositif de stockage calorifugé de façon à maintenir la température de l'enrobé ou du mélange-maître entre 60°C et 200°C. Les enrobés ou les mélange-maître froid peuvent être stockés plus longtemps à température ambiante, par exemple quelques jours ou quelques semaines ou quelques mois (avantageusement environ 2 mois).

Dans un mode de réalisation avantageux, l'étape (b) est mise en oeuvre dans un dispositif de stockage approprié. Dans ce cas l'enrobé ou le mélange maître obtenu à l'étape (a) est transféré dans ce dispositif de stockage. Ces dispositifs de stockage sont bien connus de l'homme du métier et sont avantageusement du type silo de stockage. Avantageusement la température de stockage est comprise entre la température ambiante et 200°C.

Avantageusement, les étapes (a) et (c) sont mises en oeuvre dans deux dispositifs d'enrobage ou de malaxage différents. Il y a donc un transfert de l'enrobé ou du mélange-maître entre les deux dispositifs, avantageusement entre le dispositif de l'étape (a) et le dispositif de stockage de l'étape (b) et entre le dispositif de stockage de l'étape (b) et le dispositif de l'étape (c). Les dispositifs d'enrobage ou de malaxage des étapes (a) et (c) sont bien connus de l'homme du métier. Ils peuvent être l'un et l'autre du même type ou totalement différents.

Dans un mode de réalisation avantageux, l'étape (c) consiste en la modification d'un enrobé bitumineux à chaud, à froid ou tiède prêt à l'emploi obtenu à l'étape (a), par ajout d'un fluidifiant, avantageusement l'eau, en tant que composant complémentaire de formulation, afin d'obtenir un enrobé bitumineux prêt à l'emploi à l'étape (c) plus malléable que celui obtenu en fin de stockage à l'étape (b). En effet, le refroidissement de l'enrobé lors du stockage peut le rendre moins malléable.

Dans ce cas, pour utiliser cet enrobé, il est nécessaire de rajouter en tant que composant complémentaire de formulation un fluidifiant, seul ou en association avec un autre composant complémentaire de formulation.

Dans un autre mode de réalisation de l'invention, le composant complémentaire de formulation consiste en la totalité des granulats de moyenne dimension, l'enrobé bitumineux obtenu à l'étape (a) étant un enrobé drainant prêt à l'emploi. Dans ce cas, aucun granulat de moyenne dimension n'est ajouté à l'étape (a). Avantageusement un complément de bitume est ajouté en même temps que les granulats de moyenne dimension et le composant complémentaire de formulation consiste en un mélange de bitumes et de granulats de moyenne dimension, seule une partie du bitume et non la totalité ayant été ajoutée à l'étape (a).

Dans un troisième mode de réalisation de l'invention, l'étape (a) consiste dans le malaxage de la totalité du liant bitumineux avec la totalité des granulats et éventuellement la totalité ou une partie des fines et le composant complémentaire de formulation de l'étape (c) consiste en du colorant seul ou en association avec un autre composant complémentaire de formulation, avantageusement pulvérulent ou en granulés, avantageusement de l'oxyde de fer, de façon à obtenir un enrobé bitumineux coloré prêt à l'emploi.

Dans un autre mode de réalisation de l'invention l'étape (a) consiste en la fabrication d'un mélange-maître, le complément de bitume et/ou de granulat étant rajouté à l'étape (c) en tant que composant complémentaire de formulation, seul ou en association avec un autre composant complémentaire de formulation, avantageusement un additif.

Avantageusement, l'étape (c) est mise en oeuvre sur le site de production de l'enrobé, en particulier lorsque le composant complémentaire de formulation est un fluidifiant et/ou est sous forme liquide et non sur le site d'épandage, de façon avantageuse les étapes (b) et (c) sont mises en oeuvre sur le même site, de façon encore plus avantageuse les étapes (a), (b) et (c) sont mises en oeuvre sur le même site

Ainsi, dans le cadre de la fabrication d'enrobés colorés, avantageusement d'enrobés rouges, sur postes de type continu, le principe est de :
- fabriquer des enrobés non colorés à l'étape (a), c'est-à-dire sans ajouter de colorant à l'étape (a).
- transporter ces enrobés non colorés via le circuit classique.
- stocker ces enrobés non colorés dans un silo avec un dispositif permettant d'alimenter un malaxeur pour effectuer l'étape (c).
- doser et introduire dans un malaxeur dédié en mode BATCH une quantité d'enrobés non coloré définie (trémie peseuse intermédiaire ou malaxeur sur peson). Différentes capacités sont possibles.
- ajouter, à la quantité d'enrobé non colorée dosée, le colorant correspondant (avantageusement l'oxyde de fer pour la coloration rouge) à la formule désirée et à la taille de la gâchée.
- mélanger le colorant avec l'enrobé non coloré dans le malaxeur.

### Exemple de mise en oeuvre du procédé selon l'invention en laboratoire et vérification de l'impact du temps de stockage sur le produit final :

Essai 1 : Réalisation d'une formulation d'enrobés rouge classique suivant un procédé standard (principe poste discontinu) ;

### Essais 2 et 3 :

- Réalisation de la même formulation d'enrobés rouge suivant le procédé décrit ci-dessus sans introduction d'oxyde de fer à l'étape (a) et à une température de 150°C,
- Stockage du produit issu de l'étape (a) à température constante (150°C) pendant ce temps d'attente.
   - Essai 2 : Temps de stockage 2 heures (étape (b))
   - Essai 3 : Temps de stockage 4 heures (étape (b))
- Introduction et malaxage de l'oxyde de fer après stockage (étape (c))

La formulation de l'enrobé est indiquée dans le tableau 1 ci-après :

| **Formulation (% en masse):** | Granulats 0/2 Thiviers | 46,50% |
|---|---|---|
| | Granulats 2/6 Thiviers | 50% |
| | Oxyde de fer rouge pulvérulent | 3,50% |
| | Bitume pur 50/70Azalt | 6,8 ppc |

### Température de fabrication: 150°C.

Les temps de malaxage sont indiqués dans le tableau 2 ci-après :

| **Type enrobé** | Temps malaxage (étape (a)) (sec.) | Temps de malaxage additionnel (étape (c)) (sec.) |
|---|---|---|
| **Essai 1** | 20+10 | 0 |
| **Essai 2** | 30 | 30 |
| **Essai 3** | 30 | 30 |

Concernant les mélanges, il n'y a pas de problème à rajouter le colorant au bout des 2 ou 4 heures, le mélange se fait correctement avec 30 secondes de temps additionnel (étape c).

Visuellement les enrobés sont identiques. La couleur rouge est homogène sur l'ensemble de l'enrobé quel que soit le procédé utilisé (essai 1, 2 ou 3).Les caractéristiques mécaniques obtenues sont identiques quel que soit le procédé utilisé (essai 1, 2 ou 3).

## Revendications

1. Procédé de fabrication d'un enrobé bitumineux à chaud, à froid ou tiède prêt à l'emploi, **caractérisé en ce qu'**il comprend les étapes successives suivantes :
(a) préparation d'un mélange maître aggloméré ou d'un enrobé bitumineux à chaud, à froid ou tiède par malaxage d'une partie ou de la totalité du liant bitumineux dosé sous forme liquide avec la totalité des granulats, et éventuellement avec
- une partie ou la totalité des fines et/ou
- une partie ou la totalité des agrégats d'enrobés, les agrégats d'enrobés sont tels que définis au paragraphe 39 de la description et/ou
- une partie ou la totalité de différents additifs
de façon à obtenir un mélange dans lequel les granulats, et les éventuels fines et agrégats sont enrobés par le bitume,
(b) stockage du mélange maître ou de l'enrobé bitumineux obtenu à l'étape (a), le temps de stockage de l'étape (b) étant supérieur à 2 heures,
(c) malaxage du mélange maître ou de l'enrobé bitumineux stocké à l'étape (b) avec un ou plusieurs composants complémentaires de formulation, choisis parmi : le complément de liant bitumineux et/ou le complément des agrégats d'enrobés et/ou la totalité ou le complément des fines et/ou la totalité ou le complément des additifs et/ou un mélange de ceux-ci, de façon à obtenir un enrobé bitumineux à chaud, à froid ou tiède prêt à l'emploi,
l'étape (c) étant mise en oeuvre sur le site de production de l'enrobé dans le cas où le composant complémentaire de formulation est un fluidifiant.

2. Procédé selon la revendication 1, **caractérisé en ce que** le temps de stockage de l'étape (b) est supérieur à 4 heures.

3. Procédé selon la revendication 1 **caractérisé en ce que** les composants complémentaires de formulation sont choisis parmi les colorants, les fluxants, les fluidifiants, avantageusement l'eau, les poudrettes de caoutchouc, les fibres, les morceaux de verre ou de miroir, les zéolithes, les gilsonites, les ciments, la chaux, les déchets de câble, le polyéthylène, les polymères, les cires, les additifs d'origine végétale et leurs mélanges.

4. Procédé selon les revendications 1 ou 3, **caractérisé en ce que** les composants complémentaires de formulation sont des additifs pulvérulents ou en granulés, avantageusement des colorants.

5. Procédé selon l'une quelconque des revendications 1 à 4, **caractérisé en ce que** l'étape (a) consiste dans le malaxage de la totalité du liant bitumineux avec la totalité des granulats et éventuellement la totalité ou une partie des fines, **en ce que** le composant complémentaire de formulation de l'étape (c) consiste en du colorant, de façon à obtenir un enrobé bitumineux coloré prêt à l'emploi

6. Procédé selon l'une quelconque des revendications 1 à 3 **caractérisé en ce que** l'étape (c) consiste en la modification d'un enrobé bitumineux à chaud, à froid ou tiède prêt à l'emploi obtenu à l'étape (a), par ajout d'un fluidifiant, avantageusement l'eau, en tant que composant complémentaire de formulation, afin d'obtenir un enrobé bitumineux prêt à l'emploi plus malléable que celui obtenu après stockage à l'étape (b).

7. Procédé selon l'une quelconque des revendications 1 à 4 et 6, **caractérisé en ce que** l'enrobé bitumineux obtenu est un enrobé à chaud ou tiède et **en ce que** la température des étapes (a) et (c) est comprise entre 80°C et 200°C.

8. Procédé selon l'une quelconque des revendications précédentes, **caractérisé en ce que** les étapes (a) et (c) sont mises en oeuvre dans deux dispositifs d'enrobage ou de malaxage différents.

9. Procédé selon l'une quelconque des revendications précédentes, **caractérisé en ce que** l'étape (a) est mise en oeuvre en mode continu ou discontinu.

10. Procédé selon l'une quelconque des revendications précédentes, **caractérisé en ce que** l'étape (c) est mise en oeuvre en mode continu ou discontinu.

11. Procédé selon l'une quelconque des revendications précédentes, **caractérisé en ce que** le liant bitumineux est un bitume pur, un bitume additivé, un liant synthétique clair d'origine pétrolière, un bitume pigmentable, un bitume coloré ou un liant d'origine végétal.

12. Procédé selon l'une quelconque des revendications précédentes, **caractérisé en ce que** l'étape (b) est mise en oeuvre dans un dispositif de stockage approprié.

## Patentansprüche

1. Verfahren zum Herstellen eines gebrauchsfertigen, bituminösen Heiß-, Kalt- bzw. Warmmischguts, **dadurch gekennzeichnet, dass** es die nachstehenden, aufeinanderfolgenden Schritte umfasst:
(a) Herstellen eines agglomerierten Masterbatchs bzw. eines bituminösen Heiß-, Kalt- bzw. Warmmischguts durch Vermischen eines Teils oder der Gesamtheit des zudosierten bituminösen Bindemittels in flüssiger Form mit der Gesamtheit von Granulaten und gegebenenfalls mit
- einem Teil oder der Gesamtheit der Feinstoffe und/oder
- einem Teil oder der Gesamtheit der Mischgutzuschlagstoffe, wobei die Mischgutzuschlagstoffe wie in Absatz 39 der Beschreibung definiert sind, und/oder
- einem Teil oder der Gesamtheit verschiedener Zusatzstoffe,
so dass ein Gemisch entsteht, in welchen die Granulate, die eventuellen Feinstoffe und Zuschlagstoffe mit dem Bitumen umhüllt sind,
(b) Lagerung des Masterbatchs bzw. des bituminösen Mischguts, das in Schritt (a) erhalten wurde, wobei die Lagerzeit in Schritt (b) über 2 Stunden beträgt,
(c) Vermischen des in Schritt (b) gelagerten Masterbatchs bzw. bituminösen Mischguts mit einer oder mehreren zusätzlichen Zusammensetzungskomponenten, ausgewählt aus: dem Zusatz von bituminösem Bindemittel und/oder dem Zusatz von Mischgutzuschlagstoffen und/oder der Gesamtheit oder dem Zusatz von Feinstoffen und/oder der Gesamtheit oder dem Zusatz von Zusatzstoffen und/oder einem Gemisch derselben, so dass ein gebrauchsfertiges, bituminöses Heiß-, Kalt- bzw. Warmmischgut entsteht,
wobei der Schritt (c) am Herstellungsort des Mischguts in dem Falle erfolgt, dass die zusätzliche Zusammensetzungskomponente ein Verflüssiger ist.

2. Verfahren nach Anspruch 1, **dadurch gekennzeichnet, dass** die Lagerzeit von Schritt (b) über 4 Stunden beträgt.

3. Verfahren nach Anspruch 1, **dadurch gekennzeichnet, dass** die zusätzlichen Komponenten der Zusammensetzung ausgewählt sind aus Farbstoffen, Fluxmitteln, Verflüssigern, vorteilhaft Wasser, Gummibruch, Fasern, Glas- oder Spiegelstücken, Zeolithen, Gilsoniten, Zementen, Kalk, Kabelabfällen, Polyethylen, Polymeren, Wachsen, Zusatzstoffen pflanzlichen Ursprungs und deren Gemischen.

4. Verfahren nach den Ansprüchen 1 oder 3, **dadurch gekennzeichnet, dass** die zusätzlichen Komponenten der Zusammensetzung pulverförmige oder granulatförmige Zusatzstoffe, vorteilhaft Farbstoffe, sind.

5. Verfahren nach einem der Ansprüche 1 bis 4, **dadurch gekennzeichnet, dass** der Schritt (a) in dem Vermischen der Gesamtheit des bituminösen Bindemittels mit der Gesamtheit der Granulate und gegebenenfalls der Gesamtheit oder eines Teils der Feinstoffe besteht, dass die zusätzliche Komponente der Zusammensetzung von Schritt (c) aus Farbstoff besteht, so dass ein gebrauchsfertiges, farbiges, bituminöses Mischgut entsteht.

6. Verfahren nach einem der Ansprüche 1 bis 3, **dadurch gekennzeichnet, dass** der Schritt (c) in der Veränderung eines in Schritt (a) erhaltenen gebrauchsfertigen, bituminösen Heiß-, Kalt- oder Warmmischguts durch Zufügen eines Verflüssigers, vorteilhaft Wasser, als zusätzliche Komponente der Zusammensetzung besteht, um ein gebrauchsfertiges, bituminöses Mischgut zu erhalten, das geschmeidiger ist, als das nach der Lagerung in Schritt (b) erhaltene Mischgut.

7. Verfahren nach einem der Ansprüche 1 bis 4 und 6, **dadurch gekennzeichnet, dass** das erhaltene, bituminöse Mischgut ein Heiß- oder Warmmischgut ist und dass die Temperatur der Schritte (a) und (c) zwischen 80°C und 200°C liegt.

8. Verfahren nach einem der vorangehenden Ansprüche, **dadurch gekennzeichnet, dass** die Schritte (a) und (c) in zwei unterschiedlichen Ummantelungs- oder Mischvorrichtungen durchgeführt werden.

9. Verfahren nach einem der vorangehenden Ansprüche, **dadurch gekennzeichnet, dass** der Schritt (a) kontinuierlich oder diskontinuierlich durchgeführt wird.

10. Verfahren nach einem der vorangehenden Ansprüche, **dadurch gekennzeichnet, dass** der Schritt (c) kontinuierlich oder diskontinuierlich durchgeführt wird.

11. Verfahren nach einem der vorangehenden Ansprüche, **dadurch gekennzeichnet, dass** das bituminöse Bindemittel reines Bitumen, zugesetztes Bitumen, ein helles, synthetisches Bindemittel auf Basis von Erdöl, pigmentierbares Bitumen, farbiges Bitumen oder ein Bindemittel pflanzlichen Ursprungs ist.

12. Verfahren nach einem der vorangehenden Ansprüche, **dadurch gekennzeichnet, dass** der Schritt (b) in einer geeigneten Lagervorrichtung durchgeführt wird.

## Claims

1. Process for producing a hot, cold or lukewarm ready-to-use bituminous mix, **characterized in that** it includes the following successive steps:
(a) preparing a hot, cold or lukewarm agglomerated master mix or bituminous mix by mixing some or all of the bituminous binder proportioned in liquid form with some or all of the aggregates, and optionally with
- some or all of the fines and/or
- some or all of the aggregate mix, the aggregate mix being as defined in paragraph 39 of the description, and/or
- some or all of the various additives so as to obtain a mixture in which the aggregates and any fines and aggregate mix are coated by the bitumen,
(b) storing of the master mix or of the bituminous mix obtained in step (a), the storage time of step (b) being greater than 2 hours,
(c) mixing the master mix or the bituminous mix stored in step (b) with one or more additional formulation components chosen from: the bituminous binder complement and/or the aggregates complement, and/or the aggregate mix complement, and/or all of the fines or the complement thereof, and/or all of the additives or the complement thereof and/or a mixture thereof so as to obtain a hot, cold or lukewarm ready-to-use bituminous mix,
in which step (c) is implemented at the mix production site if the additional formulation component is a thinning agent.

2. Process according to claim 1, **characterized in that** the storage time of step (b) is greater than 4 hours.

3. Process according to claim 1, **characterized in that** the additional formulation components are chosen from coloring agents, fluxing agents, thinning agents, advantageously water, ground vulcanized rubber, fibers, glass or mirror pieces, zeolites, gilsonites, cements, lime, wire waste, polyethylene, polymers, waxes, plant-based additives and mixtures thereof.

4. Process according to claims 1 or 3, **characterized in that** the additional formulation components are powder or granular additives, advantageously coloring agents.

5. Process according to any one of claims 1 to 4, **characterized in that** step (a) consists of mixing all of the bituminous binder with all of the aggregates and optionally all or some of the fines, and **in that** the additional formulation component of step (c) consists of coloring agent, so as to obtain a colored ready-to-use bituminous mix.

6. Process according to any one of claims 1 to 3, **characterized in that** step (c) consists of modifying a hot, cold or lukewarm ready-to-use bituminous mix obtained in step (a) by adding a thinning agent, advantageously water, as the additional formulation component, so as to obtain a ready-to-use bituminous mix that is more malleable than that obtained after storage in step (b).

7. Process according to any one of claims 1 to 4 and 6, **characterized in that** the bituminous mix is a hot or lukewarm bituminous mix and **in that** the temperature in steps (a) and (c) is between 80°C and 200°C.

8. Process according to any one of the previous claims, **characterized in that** steps (a) and (c) are implemented in two different coating or mixing devices.

9. Process according to any one of the previous claims, **characterized in that** step (a) is implemented continuously or discontinuously.

10. Process according to any one of the previous claims, **characterized in that** step (c) is implemented continuously or discontinuously.

11. Process according to any one of the previous claims, **characterized in that** the bituminous binder is a pure bitumen, an additive-containing bitumen, a clear synthetic oil-based binder, a pigmentable bitumen, a colored bitumen or a plant-based binder.

12. Process according to any one of the previous claims, **characterized in that** step (b) is implemented in a suitable storage device.
